# FASCICULE DE BREVET EUROPEEN

(11) **EP 4 214 639 B1**
(45) Date de publication et mention de la délivrance du brevet: **11.09.2024**
(21) Numéro de dépôt: 21778446.1
(22) Date de dépôt: 17.09.2021
(51) Int. Cl.: G06K 19/08, G06K 7/00, G06K 17/00

(54) **SYSTEME POUR L'APPAIRAGE D'UNE DONNEE D'UN DISPOSITIF EMETTEUR UWB ET D'UNE ETIQUETTE COMPORTANT UN CODE GRAPHIQUE**
SYSTEM ZUR PAARUNG EINES DATENELEMENTS EINER UWB-SENDEVORRICHTUNG UND EINES ETIKETTS MIT EINEM GRAFISCHEN CODE
SYSTEM FOR PAIRING AN ITEM OF DATA OF A UWB TRANSMITTER DEVICE AND A LABEL COMPRISING A GRAPHIC CODE

(30) Priorité: 18.09.2020 FR 2009473
(43) Date de publication de la demande: 26.07.2023
(73) Titulaire: Apitrak, 38240 Meylan (FR)
(72) Inventeur: ANTOLINOS, Luc, 31200 TOULOUSE (FR)
(74) Mandataire: Oak & Fox
(86) Numéro de dépôt international: PCT/EP2021/075714
(87) Numéro de publication internationale: WO 2022/058559

(56) Documents cités:
- WO-A2-2011/007260
- FR-A1- 2 717 593
- FR-A1- 3 089 660
- US-A1- 2003 057 276

## Description

### Domaine de l'invention

Le domaine de l'invention concerne le domaine des dispositifs émetteur radio UWB, de type étiquette radio, comportant un module de réception d'énergie radio UHF pour alimenter les composants électroniques dudit dispositif émetteur. Le domaine de l'invention se rapporte aux dispositifs émetteurs UWB lorsqu'ils sont physiquement associés à une étiquette comportant un code graphique tel qu'un QR code.

### Etat de l'art

Il existe des objets comportant des étiquettes radio de types RFID ou des étiquettes comportant un code graphique de type QR code. Toutefois, lorsque ces objets pénètrent dans un environnement couvert par un système de localisation radio UWB, ces objets devraient comprendre un émetteur UWB pour permettant leur identification et leur localisation. Un problème est qu'il est nécessaire de faire exister deux types d'étiquette sur un même objet n'ayant aucun moyen de se découvrir l'une et l'autre.

Il existe un besoin de faire coexister ces deux systèmes tout en améliorant leur connaissance mutuelle. Une solution existante est de créer une passerelle réseau entre les deux systèmes par une architecture permettant de faire dialoguer les deux systèmes. Toutefois, cette architecture est complexe à créer et n'est pas facilement déployable à chaque fois qu'un objet transite d'un environnement à l'autre.

De la demande de brevet US2003/057276 A1, on connaît une solution d'appairage entre une étiquette présentant un code graphique et une étiquette présentant un émetteur radiofréquence.

De la demande de brevet WO2011/007260 A2, on connaît une étiquette sur laquelle sont superposées une première étiquette présentant un code graphique et une deuxième étiquette comprenant un tag RFID.

De la demande de brevet FR3089660 A1, on connaît un appareil et un système d'identification d'un objet destiné à circuler dans un local.

### Résumé de l'invention

Selon un aspect l'invention concerne un système selon la revendication 1.

Un avantage est de permettre d'appairer une étiquette préexistante sur un objet avec un dispositif émetteur UWB qui ne connait pas, à priori, l'étiquette déjà apposée. Cet appairage physique directement effectué sur l'objet grâce à un dispositif tiers, le dispositif d'appairage, permet d'associer au moins deux identifiants : celui de l'étiquette comportant un code graphique et celui du dispositif émetteur UWB.

Selon un mode de réalisation, le dispositif d'appairage comprend une interface radio pour recevoir un signal radio d'une puce RFID. Selon un exemple, le dispositif d'appairage comprend un calculateur permettant de décoder un signal radio de type RFID ou autre et d'enregistrer dans une mémoire les données décodées, telles qu'un identifiant.

Un autre avantage est de permettre une conversion d'un code graphique préexistant et/ou d'un identifiant radio de type provenant d'une puce RFID déjà enregistré dans une base de données en un code lisible par un système de localisation UWB ou par un système récupérant les données UWB. Un système récupérant les données UWB peut être par exemple un ensemble d'équipements comprenant un serveur de données connaissant le réseau UWB et un réseau Wifi par exemple. L'exploitation des données propres à l'identification d'un objet devient plus facile du fait de cet appairage possible. Un tel appairage permet de faire transiter facilement un objet dans un environnement non couvert par un rayonnement UWB vers un environnement sous couverture UWB.

Selon un mode de réalisation, le dispositif d'appairage comporte un lecteur optique permettant de décoder un code graphique 1D ou 2D. Un avantage est de faire transiter un code graphique décodé en un code lisible par le système de localisation UWB.

Selon un mode de réalisation, le dispositif d'appairage comportant une première interface de communication pour émettre un message de données à un serveur distant, ledit serveur distant comportant une mémoire pour enregistrer ledit couple de valeurs. Selon différentes réalisations, le système de l'invention peut comprendre uniquement le dispositif d'appairage ou le dispositif d'appairage et un serveur distant ou encore le dispositif d'appairage et au moins un dispositif émetteur UWB, voire l'ensemble des équipements. La première interface de communication est préférentielle une interface sans fil, par exemple utilisant le protocole Wifi.

Selon un mode de réalisation, le dispositif d'appairage comportant une seconde interface de communication pour envoyer un message de données encodant une donnée encodée dans le code graphique audit dispositif émetteur, ledit dispositif émetteur comportant une interface pour recevoir lesdites données émises par le dispositif d'appairage et une mémoire pour enregistrer les données propres au code graphique, le dispositif émetteur émettant le couple de valeurs dans un signal UWB à destination d'une balise de réception. Un avantage de ce mode de réalisation est d'embarquer directement le code graphique décodé au sein du système de communication UWB. Dans ce cas, le dispositif émetteur UWB comprend les moyens pour traiter le code numérique décodé du code graphique.

Selon un exemple de réalisation, le dispositif émetteur comprend un composant programmable pour enregistrer une donnée depuis le dispositif d'appairage.

Selon un mode de réalisation, la zone délimitant un contour géométrique du support du dispositif émetteur comprend une surface d'un matériau transparent. Un avantage est de superposer la première étiquette et le dispositif émetteur qui peut prendre la forme d'une étiquette également. Il est alors plus facile d'accéder aux informations propres à l'objet.

Selon un exemple, la zone peut être une zone ajourée d'un support telle qu'une ouverture. Selon un exemple le dispositif émetteur comprend une plaquette rigide comportant une fenêtre transparente. Un avantage est de superposer la première étiquette et le dispositif émetteur tout en garantissant l'accès aux informations des deux éléments.

Selon un mode de réalisation, le système comprend la première étiquette, ladite première étiquette comportant un code graphique de type QR code, Flashcode, code-barre, Datamatrix.

Selon un mode de réalisation, le dispositif d'appairage comprend des moyens pour fixer ledit dispositif émetteur sur un support de la première étiquette. Un avantage est de disposer d'un équipement réalisant les deux fonctions : d'une part celle d'appairer les données de la première étiquette et celles du dispositif émetteur et d'autre part celle d'associer physiquement la première étiquette et le dispositif émetteur.

Selon un exemple, la fixation du dispositif émetteur peut être réalisée par vissage, clouage, ou collage. Selon un exemple, le dispositif émetteur comprend un collier pour le passage d'un fil, un connecteur ou une attache. Selon un exemple, le dispositif émetteur comprend une face pour apposer une face stickable ou collable.

Selon un mode de réalisation, le dispositif d'appairage forme un pistolet comportant une tête de lecture pour scanner le code graphique et un support de maintien du dispositif d'appairage pour le rendre solidaire dudit support de la première étiquette.

Selon un mode de réalisation, le dispositif d'appairage sous la forme d'un pistolet scanne et applique le dispositif émetteur UWB. Dans un mode de réalisation, le dispositif d'appairage effectue l'action mécanique de fixation. Cette dernière opération peut être réalisée par strap, par cloutage, par agrafage, par collage etc.

Le dispositif d'appairage de l'invention permet donc de scanner et de programmer le dispositif émetteur UWB apposé sur la première étiquette tout en fixant ledit dispositif émetteur UWB à la première étiquette. Selon un mode de réalisation, le dispositif d'appairage permet d'émettre par une interface réseau vers un serveur distant les données d'appairage du dispositif émetteur UWB et la première étiquette de manière à les enregistrer dans une mémoire.

Selon un mode de réalisation, la première étiquette est une étiquette autocollante ou un papier électronique.
Selon un exemple, l'écran de la première étiquette est de type encre électronique.

Selon un mode de réalisation, le support de fixation de la première étiquette est une étiquette autocollante ou un papier électronique.

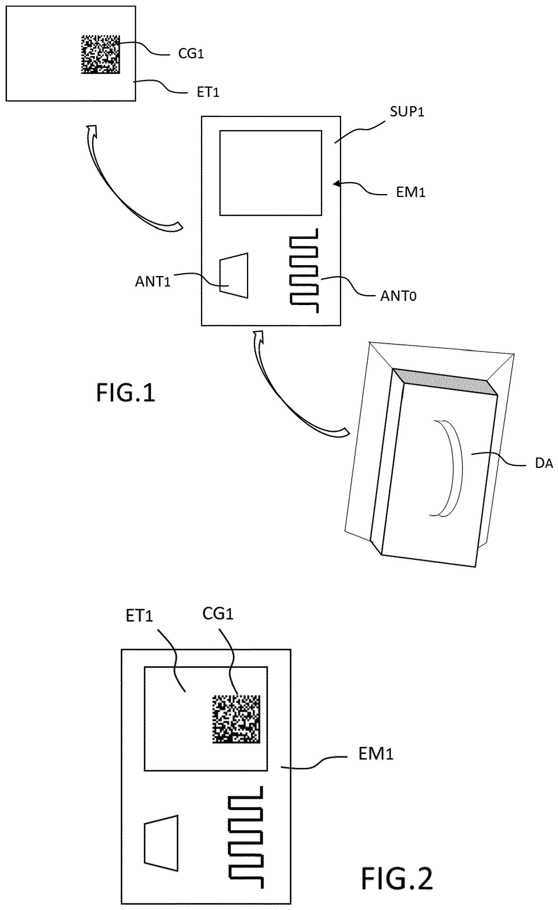

D'autres caractéristiques et avantages de l'invention ressortiront à la lecture de la description détaillée qui suit, en référence aux figures annexées, qui illustrent :
▪ Fig.1 : un exemple de mode de réalisation de l'invention comportant une première étiquette, un dispositif émetteur UWB et un dispositif d'appairage ;
▪ Fig.2 : un exemple de mode de réalisation de l'invention comportant une première étiquette associée physiquement à un dispositif émetteur grâce au dispositif d'appairage.

La notation « UWB » désigne la bande de fréquence « Ultra Wide Band » dans la terminologie anglo-saxonne. La notation « UHF » désigne la bande « Ultra High Frequency » dans la terminologie anglo-saxonne.

La figure 1 représente un exemple de réalisation d'une première étiquette ET₁ comportant un code graphique CG₁ qui peut être par exemple un data matrix ou un QR code ou un flash code. Cette première étiquette ET₁, selon un cas d'usage, est déjà apposée à un objet transitant d'un endroit à un autre.

La figure 1 représente également un dispositif émetteur UWB noté EM₁. La notation « UWB » désigne la bande de fréquence « Ultra Wide Band ». Le dispositif émetteur EM₁ comporte un module d'émission radio UWB comportant une antenne ANT₁ et un module de réception radio UHF comportant une antenne ANT₀ pour collecter des signaux afin d'alimenter électriquement le module d'émission UWB. Ainsi, l'invention trouve tout son intérêt pour appairer de manière ad hoc deux équipements n'étant pas configurés au préalable pour communiquer ensemble. Le dispositif émetteur EM₁ comporte un support SUP₁ ajourée pour laisser visible le code graphique CG₁ lorsqu'il sera superposé à la première étiquette.

Le dispositif d'appairage D_{A} est représenté à la figure 1 avec une poignée facilitant sa manipulation. En outre, le dispositif d'appairage D_{A} comporte une zone pour maintenir le dispositif émetteur EM₁ en superposition de la première étiquette ET₁. Selon un mode de réalisation, l'équipement d'appairage DA comporte un moyen pour fixer le dispositif émetteur EM₁ sur l'objet sur lequel est déjà fixée l'étiquette ET₁. La fixation peut être réalisée grâce à une colle, un adhésif, un clip, une agrafe ou tout autre moyen.

Le dispositif d'appairage D_{A} comprend des moyens de communication radio non représentés pour recevoir un signal UWB émis par le dispositif émetteur EM₁. Selon un exemple, le dispositif d'appairage D_{A} comprend un émetteur UHF pour émettre un flux radio vers le dispositif émetteur EM₁ afin de provoquer l'émission d'un signal UWB du dispositif émetteur EM₁ lorsque celle-ci est déclenchée automatiquement après avoir reçu un niveau d'énergie radio UHF suffisant.

La figure 2 représente la première étiquette ET₁ à laquelle est fixé de manière superposée un dispositif émetteur EM₁.

Selon un mode de réalisation, le dispositif émetteur EM₁ comprend un palpeur pour détecter si étiquette est arrachée de l'objet sur lequel l'étiquette ET₁ est fixée. Si elle se décolle, une émission d'une alerte est automatiquement générée.

Selon une alternative, lorsque le palpeur détecte un arrachement, une modification de l'état physique du dispositif émetteur UWB entraine automatiquement le dé-appairage ou la dé-association des données produites lors de l'appairage de l'étiquette UWB avec le code graphique. Un intérêt est de ne plus permettre de se servir du dispositif émetteur UWB et des données d'appairage. Le dé-appairage peut résulter en un effacement des données stockées dans une mémoire du dispositif émetteur UWB.

Selon une alternative, si un arrachement est automatiquement détecté par un changement physique d'état du dispositif émetteur UWB, une donnée numérique peut être automatiquement intégrée dans le message UWB émis par le dispositif émetteur UWB. Cette donnée qui est ensuite décodée par les balises de réception permet de déclencher une alarme de décrochement qui sera traitée par un serveur de données.

Selon un mode de réalisation, le dé-appairage entre le dispositif émetteur UWB et le la première étiquette ET₁ peut être réalisé à partir du dispositif d'appairage D_{A}. Dans une séquence identique à l'émission d'un message de données du dispositif d'appairage DA vers le dispositif émetteur UWB, le dispositif d'appairage D1 émet une consigne d'effacement afin d'effacer le contenu de la puce UWB.

Selon un mode de réalisation, le dispositif d'appairage D_{A} comprend une interface radio pour recevoir un signal radio émis par une la puce RFID ou NFC et un calculateur pour décoder les données du signal radio émis par ladite puce RFID ou NFC. Ce mode de réalisation du dispositif d'appairage D_{A} est particulièrement intéressant pour appairer une étiquette RFID avec un dispositif UWB.

Lorsque le dispositif d'appairage D_{A} reçoit des données de la puce RFID ou NFC et les données émises par le dispositif émetteur UWB, il est en mesure de générer un couple de données comportant une donnée propre au signal radio RFID ou NFC et une donnée propre au signal UWB reçu. Ce couple permet d'appairer les deux dispositifs.

Lorsque la donnée d'appairage est réémise vers le dispositif émetteur UWB, identiquement au cas de réalisation décrit précédemment, une procédure de dé-appairage peut être effectuée de manière à effacer les données d'appairage enregistrées dans le dispositif émetteur UWB.

### Exemple de réalisation d'un dispositif émetteur radio UWB

Un dispositif émetteur radio UWB peut comprendre un support électronique comportant un modulateur et une antenne UWB. Le dispositif émetteur radio émet des messages sous la forme de séquences d'impulsions radio à bande ultra-large, dits « messages UWB ». De tels messages UWB, formés par une séquence d'impulsions radio, sont également désignés par « Ultra Wide Band-Impulse Radio » ou UWB-IR dans la littérature anglo-saxonne. Le dispositif émetteur de l'invention peut être assimilé à une étiquette radio lorsqu'elle est destinée à être apposée ou fixée à un objet pour être localisée.

Le dispositif émetteur UWB comporte un modulateur et une antenne pour émettre un signal dans la bande UWB. Les données sont modulées par le modulateur. Selon un mode de réalisation, une mémoire et un calculateur peuvent être intégrés dans le dispositif émetteur radio pour traiter, stocker, mettre en forme les données à émettre dans les messages ou les signaux UWB.

Selon un exemple de réalisation, le dispositif émetteur radio UWB comporte une alimentation afin de fournir une tension aux différents composants. Selon un autre mode de réalisation, l'alimentation électrique provient d'une capacité qui est chargée grâce à la réception et à la collecte d'ondes radio, par exemple dans la bande UHF.

Selon un mode de réalisation, le dispositif émetteur radio UWB comporte un module de contrôle configuré pour piloter les émissions des messages UWB. Selon un mode de réalisation, la période d'émission, la puissance d'émission, le codage des données, la modulation UWB, etc. sont configurés dans le module de contrôle pour réaliser les émissions de messages UWB. Selon un exemple, un seuil d'énergie accumulée permet de déclencher l'émission d'un message UWB. Selon un mode de réalisation, les différentes fonctions énumérées peuvent être supportées par différents composants ou être mises en oeuvre par le même composant.

Selon un exemple de réalisation, le dispositif émetteur radio UWB comporte un module de réception radio pour recevoir un flux d'ondes radio. Dans ce mode de réalisation, une balise émettrice d'un flux radio permet au dispositif émetteur radio UWB de collecter une énergie radio fréquence.

Selon un mode de réalisation, une balise émettrice d'un flux radio peut être une ou plusieurs stations d'alimentation électrique sans fil répartie(s) sur la zone géographique couverte par les balises de réception UWB. Dans ce mode de réalisation, les stations d'alimentation électrique sans fil alimentent à distance les étiquettes 20 en énergie électrique. Selon un mode de réalisation, les balises émettrices, également dénommées « stations d'alimentation électrique sans fil » ou générateur UHF, sont distinctes des balises réceptrices. Rien n'exclut cependant, suivant d'autres exemples, d'avoir une ou plusieurs desdites stations d'alimentation électrique sans fil qui soient intégrées dans une ou plusieurs balises réceptrices UWB, de sorte qu'au moins un équipement dudit système d'estimation de position est à la fois une station d'alimentation électrique sans fil et une balise réceptrice.

Selon le mode de réalisation, le dispositif émetteur UWB comprend un redresseur pour convertir la puissance spectrale reçue par le module de réception radio en une tension ou un courant électrique. L'énergie convertie peut alors être stockée dans un accumulateur électrique, telle une capacité. L'accumulateur électrique se comporte donc comme une batterie permettant de délivrer l'énergie nécessaire à l'émission de messages UWB. Selon un exemple, la capacité peut être pilotée électriquement à partir d'une consigne électrique générée par composant ou directement par elle-même lorsqu'un niveau de charge est atteint.

Selon un mode de réalisation, le dispositif émetteur de l'invention pourrait également alimenter un capteur et/ou un calculateur, par exemple un microprocesseur, qui s'interfacent avec le modulateur UWB.

Selon un mode de réalisation, le dispositif émetteur radio UWB comprend un module de communication simplex. Par « simplex », on entend que le module de communication est adapté uniquement à émettre des messages UWB mais ne permet pas de recevoir des messages UWB émis par d'autres équipements tiers.

Selon un exemple, le module de communication simplex se présente par exemple sous la forme d'un circuit électrique comportant des équipements tels qu'une antenne, un amplificateur, un oscillateur local, un mélangeur, un filtre analogique et tout autre équipement pouvant contribuer à l'émission de signaux UWB.

Selon un exemple, le module de communication simplex est configuré pour émettre les messages UWB dans une bande de fréquences centrée sur 4 gigahertz (GHz) et/ou centrée sur 7.25 GHz. Rien n'exclut cependant de considérer des bandes de fréquences centrées sur d'autres fréquences.

Les messages UWB, émis sous la forme de signaux radioélectriques, présentent à un instant donné un spectre fréquentiel instantané de largeur prédéterminée, par exemple comprise entre 500 mégahertz (MHz) et 2.5 GHz, ce qui correspond à des impulsions radio de durées comprises respectivement entre quelques nanosecondes et quelques dixièmes de nanosecondes.

Dans un mode de réalisation, le module de communication simplex est configuré pour émettre les messages UWB en utilisant une modulation d'impulsion radio en tout ou rien (« On Off Keying » ou OOK dans la littérature anglo-saxonne) pour encoder des bits à émettre. C'est-à-dire que les valeurs des bits à émettre sont encodées par une présence ou une absence d'impulsion radio. Par exemple, si à un instant donné le bit à émettre vaut « 1 » alors le module de communication simplex émet une impulsion radio, alors que si le bit à émettre vaut « 0 » ledit module de communication simplex n'émet pas d'impulsion radio. De telles dispositions sont avantageuses en ce qu'elles permettent de réduire la consommation électrique nécessaire pour émettre un message UWB, puisque l'émission de bits à émettre à « 0 » ne consomme presque pas d'énergie électrique.

Selon un autre mode de réalisation, une modulation en position d'impulsions radio (« Pulse Position Modulation » ou PPM dans la littérature anglo-saxonne) peut être mise en oeuvre dans le procédé de l'invention. Par exemple, en considérant que les bits à émettre sous la forme d'impulsions radio sont cadencés à une période prédéterminée Tc, alors à chaque période Tc, les impulsions sont émises avec un décalage par rapport à la période Tc, la valeur dudit décalage dépendant de la valeur du bit à émettre.

Selon un mode de réalisation, chaque impulsion radio à bande ultra-large peut être formée en multipliant un signal sinusoïdal par une enveloppe d'impulsions. Dans ce cas, l'oscillateur local formant le signal sinusoïdal correspondant à la fréquence porteuse des impulsions radio peut rester activé de manière continue sur la durée du message UWB, et l'amplitude dudit signal sinusoïdal est modulée par ladite enveloppe d'impulsion. En dehors des instants d'émission d'impulsions radio, l'amplitude du signal sinusoïdal est modulée par un signal de valeur nulle.

Le signal modulé obtenu après modulation d'amplitude du signal sinusoïdal est ensuite fourni en entrée de l'amplificateur, qui peut également rester activé pendant toute la durée du message UWB à émettre. En modulant le signal sinusoïdal par une enveloppe d'impulsion avant d'amplifier, les impulsions radio sont formées avant l'amplificateur. Ledit amplificateur ne forme donc plus les impulsions radio mais se contente d'amplifier lesdites impulsions radio préalablement formées. Il est à noter qu'il est néanmoins possible de désactiver l'amplificateur entre les impulsions radio afin de réduire la consommation électrique de l'amplificateur.

Selon un mode de réalisation, le module de contrôle comporte un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter.

Alternativement ou en complément, le module de contrôle comporte un ou des circuits logiques programmables (FPGA, PLD, etc.), et/ou un ou des circuits intégrés spécialisés (ASIC).

Selon un mode de réalisation, le module de contrôle comporte un ensemble de moyens configurés de façon logicielle (produit programme d'ordinateur spécifique) et/ou matérielle (FPGA, PLD, ASIC, composants électroniques discrets, etc.).

Afin de reconstruire la position d'un dispositif émetteur, le serveur comprend des moyens pour effectuer :
▪ Un contrôle de cohérence entre chaque message reçu par une pluralité de balises de réception, la cohérence correspondant à un écart de temps d'arrivée des messages inférieur à un seuil prédéfini et ;
▪ Une construction de la position d'un dispositif émetteur par un algorithme de trilatération entre les temps d'arrivée des différents messages UWB.

Une telle méthode s'appuie sur l'exploitation des différents temps de vol des messages UWB émis par un dispositif émetteur et reçus par chaque balise de réception.

Afin de réaliser un tel algorithme, selon un exemple, le système comprend un dispositif d'émission d'une horloge qui diffuse une donnée de synchronisation aux différentes balises de réception. Chaque balise B₁, B₂, B₃ reçoit un signal de synchronisation provenant par exemple d'un autre système ou d'une balise « maître ». Le signal de synchronisation est, par exemple, un signal comportant un marqueur temporel distribué à chaque balise, ledit signal étant généré à partir d'une horloge distante.

Selon un cas de réalisation, chaque balise comprend un calculateur pour :
▪ extraire au moins une donnée d'identification de ladite étiquette radio ;
▪ calculer une information temporelle horodatant la réception d'un message émis par le dispositif émetteur, ledit marqueur temporel étant généré à partir d'une horloge et d'un message de synchronisation. Dans ce dernier cas, chaque balise comporte, par exemple, une interface pour recevoir ledit signal de synchronisation.

## Revendications

1. Système comprenant :
• une première étiquette (ET₁) comportant un code graphique (CG₁),
• un dispositif émetteur radio UWB (EM₁) comportant un module d'émission radio UWB d'un signal UWB et un module de réception radio UHF pour collecter des signaux afin d'alimenter électriquement le module d'émission UWB,
• un dispositif d'appairage (D_{A}) comprenant un lecteur dudit premier code graphique (CG₁) et un récepteur UWB pour recevoir le signal UWB émis par le dispositif émetteur (EM₁), ledit dispositif d'appairage (D_{A}) comportant une mémoire pour enregistrer un couple de valeurs comportant une donnée propre au code graphique (CG₁) et une donnée propre au signal UWB reçu, ledit dispositif émetteur (EM₁) comportant un support comportant une zone délimitant un contour géométrique permettant de lire visuellement le code graphique (CG₁) de la première étiquette (ET₁) lorsque le dispositif émetteur (EM₁) est superposé à la première étiquette (ET₁),

2. Système selon la revendication 1, **caractérisé en ce que** le dispositif d'appairage (D_{A}) comprend une interface radio pour recevoir un signal radio d'une puce RFID et un calculateur pour décoder les données dudit signal radio, le dispositif d'appairage (D_{A}) générant un second couple de données comportant une donnée propre au signal radio RFID et une donnée propre au signal UWB reçu.

3. Système selon l'une des revendications précédentes, **caractérisé en ce que** le dispositif d'appairage (D_{A}) comporte :
▪ un lecteur optique permettant de décoder un code graphique 1D ou 2D et ;
▪ des moyens pour fixer ledit dispositif émetteur (EM₁) sur un support de la première étiquette (ET₁).

4. Système selon l'une des revendications précédentes, dans lequel le dispositif d'appairage (D_{A}) comporte une première interface de communication pour émettre un message de données à un serveur distant, ledit serveur distant comportant une mémoire pour enregistrer ledit couple de valeurs.

5. Système selon l'une des revendications précédentes, dans lequel le dispositif d'appairage (D_{A}) comporte une seconde interface de communication pour envoyer un message de données dans lequel est encodé une donnée encodée dans le code graphique (CG₁) audit dispositif émetteur (EM₁), ledit dispositif émetteur (EM₁) comportant une interface pour recevoir lesdites données émises par le dispositif d'appairage (D_{A}) et une mémoire pour enregistrer les données propres au code graphique (CG₁), le dispositif émetteur (EM1) émettant le couple de valeurs dans un signal UWB à destination d'une balise de réception.

6. Système selon l'une des revendications précédentes, **caractérisé en ce que** la zone délimitant un contour géométrique du support (SUP₁) du dispositif émetteur (EM₁) comprend une surface d'un matériau transparent.

7. Système selon l'une des revendications précédentes, dans lequel ladite première étiquette comportant un code graphique (CG₁) de type QRcode, Flashcode, code-barre, datamatrix.

8. Système selon l'une des revendications précédentes, **caractérisé en ce que** le dispositif d'appairage (D_{A}) forme un pistolet comportant une tête de lecture pour scanner le code graphique (CG₁) et un support de maintien du dispositif d'appairage (D_{A}) pour le rendre solidaire dudit support de la première étiquette (ET₁).

9. Système selon l'une des revendications 7 et 8, **caractérisé en ce que** la première étiquette (ET₁) est une étiquette autocollante ou un papier électronique et **en ce que** le support de fixation de la première étiquette (ET₁) est une étiquette autocollante ou un papier électronique.

10. Système selon l'une des revendications précédentes, **caractérisé en ce que** le dispositif d'appairage (DA) comporte une source d'énergie UHF directive afin de générer une énergie suffisante au dispositif émetteur (EM₁) pour qu'il émette automatiquement un message de données UWB.

## Patentansprüche

1. System, umfassend:
• ein erstes Etikett (ET₁), das einen Grafikcode (CG₁) aufweist,
• eine UWB-Funksendevorrichtung (EM₁), die ein UWB-Funksendemodul eines UWB-Signals und ein UHF-Funkempfangsmodul zum Sammeln von Signalen aufweist, um das UWB-Sendemodul mit Strom zu versorgen,
• eine Pairingvorrichtung (D_{A}), die ein Lesegerät des ersten Grafikcodes (CG₁) und einen UWB-Empfänger zum Empfangen des von der Sendevorrichtung (EM₁) gesendeten UWB-Signals umfasst, wobei die Pairingvorrichtung (D_{A}) einen Speicher zum Speichern eines Wertepaars aufweist, das ein spezifisches Datenelement des Grafikcodes (CG₁) und ein spezifisches Datenelement des empfangenen UWB-Signals aufweist,
wobei die Sendevorrichtung (EM₁) einen Träger aufweist, der einen Bereich aufweist, der eine geometrische Kontur begrenzt, die es gestattet, den Grafikcode (CG₁) des ersten Etiketts (ET₁) visuell zu lesen, wenn die Sendevorrichtung (EM₁) über dem ersten Etikett (ET₁) liegt.

2. System nach Anspruch 1, **dadurch gekennzeichnet, dass** die Pairingvorrichtung (D_{A}) eine Funkschnittstelle zum Empfangen eines Funksignals von einem RFID-Chip und einen Rechner zum Dekodieren der Daten dieses Funksignals umfasst, wobei die Pairingvorrichtung (D_{A}) ein zweites Datenpaar erzeugt, das ein für das RFID-Funksignal spezifisches Datenelement und ein für das empfangene UWB-Signal spezifisches Datenelement aufweist.

3. System nach einem der vorhergehenden Ansprüche, **dadurch gekennzeichnet, dass** die Pairingvorrichtung (D_{A}) aufweist:
▪ ein optisches Lesegerät zur Dekodierung eines 1D- oder 2D-Grafikcodes; und
▪ Mittel zum Befestigen der Sendevorrichtung (EM₁) auf einem Träger des ersten Etiketts (ET₁).

4. System nach einem der vorhergehenden Ansprüche, wobei die Pairingvorrichtung (D_{A}) eine erste Kommunikationsschnittstelle zum Senden einer Datennachricht an einen entfernten Server aufweist, wobei der entfernte Server einen Speicher zum Speichern des Wertepaars aufweist.

5. System nach einem der vorhergehenden Ansprüche, wobei die Pairingvorrichtung (D_{A}) eine zweite Kommunikationsschnittstelle aufweist, um eine Datennachricht, in der ein in dem Grafikcode (CG₁) kodiertes Datenelement kodiert ist, an die Sendevorrichtung (EM₁) zu schicken, wobei die Sendevorrichtung (EM₁) eine Schnittstelle zum Empfangen der von der Pairingvorrichtung (D_{A}) gesendeten Daten aufweist und einen Speicher zum Speichern der für den Grafikcode (CG₁) spezifischen Daten, wobei die Sendevorrichtung (EM₁) das Wertepaar in einem UWB-Signal an eine Empfangsbake sendet.

6. System nach einem der vorhergehenden Ansprüche, **dadurch gekennzeichnet, dass** der Bereich, der eine geometrische Kontur des Trägers (SUP₁) der Sendevorrichtung (EM₁) begrenzt, eine Oberfläche aus einem transparenten Material umfasst.

7. System nach einem der vorhergehenden Ansprüche, wobei das erste Etikett einen Grafikcode (CG₁) vom Typ QR-Code, Flashcode, Barcode, Datamatrix aufweist.

8. System nach einem der vorhergehenden Ansprüche, **dadurch gekennzeichnet, dass** die Pairingvorrichtung (D_{A}) eine Pistole bildet, die einen Lesekopf zum Scannen des Grafikcodes (CG₁) und einen Halteträger der Pairingvorrichtung (D_{A}) aufweist, um sie mit dem Träger des ersten Etiketts (ET₁) fest zu verbinden.

9. System nach einem der Ansprüche 7 und 8, **dadurch gekennzeichnet, dass** das erste Etikett (ET₁) ein selbstklebendes Etikett oder ein elektronisches Papier ist und dass der Befestigungsträger des ersten Etiketts (ET₁) ein selbstklebendes Etikett oder ein elektronisches Papier ist.

10. System nach einem der vorhergehenden Ansprüche, **dadurch gekennzeichnet, dass** die Pairingvorrichtung (DA) eine richtungsweisende UHF-Energiequelle aufweist, um für die Sendevorrichtung (EM₁) ausreichend Energie zu erzeugen, damit sie automatisch eine UWB-Datennachricht sendet.

## Claims

1. System comprising:
• one first tag (ET₁) comprising a graphic code (CG₁),
• a UWB radio transmitter device (EM₁) comprising a UWB radio transmission module of a UWB signal and a UHF radio reception module to collect signals in order to electrically power the UWB transmission module,
• a pairing device (D_{A}) comprising a reader of said first graphic code (CG₁) and a UWB receiver to receive the UWB signal transmitted by the transmitter device (EM₁), said pairing device (D_{A}) comprising a memory to save a pair of values comprising a data specific to the graphic code (CG₁) and a data specific to the UWB signal received,
said transmitter device (EM₁) comprising a support comprising a zone delimiting a geometric contour making it possible to visually read the graphic code (CG₁) of the first tag (ET₁) when the transmitter device (EM₁) is superimposed on the first tag (ET₁).

2. System according to claim 1, **characterized in that** the pairing device (D_{A}) comprises a radio interface for receiving a radio signal from an RFID chip and a calculator for decoding the data of said radio signal, the pairing device (D_{A}) generating a second data pair comprising a data specific to the RFID radio signal and a data specific to the UWB signal received.

3. System according to one of the preceding claims, **characterized in that** the pairing device (D_{A}) comprises:
▪ an optical reader making it possible to decode a 1D or 2D graphic code and;
▪ means to attach said transmitter device (EM₁) on a support of the first tag (ET₁).

4. System according to one of the preceding claims, in which the pairing device (D_{A}) comprises a first communication interface to transmit a data message to a remote server, said remote server comprising a memory to save said pair of values.

5. System according to one of the preceding claims, in which the pairing device (D_{A}) comprises a second communication interface to send a data message in which an encoded data is encoded in the graphic code (CG₁) to said transmitter device (EM₁), said transmitter device (EM₁) comprising an interface for receiving said data transmitted by the pairing device (D_{A}) and a memory for saving the data specific to the graphic code (CG₁), the transmitter device (EM1) transmitting the pair of values in a UWB signal to a reception beacon.

6. System according to one of the preceding claims, **characterized in that** the zone delimiting a geometric contour of the support (SUP₁) of the transmitter device (EM₁) comprises a surface of a transparent material.

7. System according to one of the preceding claims, in which said first tag comprising a graphic code (CG₁) of the QRcode, Flashcode, barcode, datamatrix type.

8. System according to one of the preceding claims, **characterized in that** the pairing device (D_{A}) forms a gun comprising a reading head for scanning the graphic code (CG ₁) and a support for holding the pairing device (D_{A}) to make it integral with said support of the first tag (ET₁).

9. System according to one of claims 7 and 8, **characterized in that** the first tag (ET₁) is a self-adhesive tag or an electronic paper and **in that** the attaching support of the first tag (ET₁) is a self-adhesive tag or an electronic paper.

10. System according to one of the preceding claims, **characterized in that** the pairing device (DA) comprises a directive UHF energy source in order to generate sufficient energy to the transmitter device (EM₁) such that it automatically transmits a UWB data message.
